# FASCICULE DE BREVET EUROPEEN

(11) **EP 2 052 653 B1**
(45) Date de publication et mention de la délivrance du brevet: **08.02.2012**
(21) Numéro de dépôt: 08290990.4
(22) Date de dépôt: 22.10.2008
(51) Int. Cl.: A47J 27/09

(54) **Autocuiseur pourvu d'un système de sécurité à la surpression**
Schnellkochtopf mit einem Überdruck-Sicherheitssystem
Pressure cooker equipped with a high-pressure safety system

(30) Priorité: 23.10.2007 FR 0707407
(43) Date de publication de la demande: 29.04.2009
(73) Titulaire: SEB S.A., 69132 Ecully Cedex (FR)
(72) Inventeur: Rhetat, Eric, Jacques, 21000 Dijon (FR); Bouye, Nathalie, 52200 Langres (FR)
(74) Mandataire: Martin, Didier Roland Valéry

(56) Documents cités:
- WO-A-99/08580
- DE-A1- 3 618 231

## Description

La présente invention se rapporte au domaine technique général des ustensiles de cuisine du type récipient de cuisson, et en particulier au secteur des appareils domestiques de cuisson d'aliments sous pression destinés à assurer la cuisson sous pression de vapeur des aliments contenus en leur sein, tel que les autocuiseurs.

La présente invention concerne plus particulièrement un appareil domestique de cuisson d'aliments sous pression comprenant :
- une cuve pourvue d'un fond et d'une paroi latérale s'élevant à partir dudit fond et délimitant une ouverture,
- un couvercle destiné à être associé à la cuve pour former avec cette dernière une enceinte de cuisson,
- un joint d'étanchéité interposé entre la paroi latérale et le couvercle, ledit joint étant conçu pour être en contact avec la paroi latérale tant que la pression régnant au sein de l'enceinte n'excède pas une valeur prédéterminée de sécurité, de façon à conférer à l'enceinte de cuisson un caractère sensiblement étanche,
ledit appareil étant conçu pour que lorsque la pression régnant dans l'enceinte atteint la valeur prédéterminée de sécurité, le joint se déplace au moins localement relativement à la paroi latérale jusqu'à atteindre une position prédéterminée de sécurité.

Les appareils de cuisson sous pression à usage domestique, du genre autocuiseur, sont largement connus, voir par exemple DE 3 618 231 A, ou WO 99/08580 A.

Ces appareils comportent généralement une cuve pourvue d'un fond à partir duquel s'élève une paroi latérale. Le fond et la paroi latérale définissent un récipient ouvert à son extrémité supérieure, destiné à accueillir les aliments à cuire. Ces appareils connus comportent également un couvercle, destiné à être verrouillé relativement à la cuve, à l'extrémité supérieure de cette dernière.

Un joint d'étanchéité, se présentant sous la forme d'une pièce circulaire en élastomère épousant la forme de l'interface entre la cuve et le couvercle, permet de réaliser une enceinte de cuisson sensiblement étanche, c'est-à-dire une enceinte qui est d'une part suffisamment hermétique pour autoriser une montée en pression en son sein et d'autre part qui ne communique avec l'extérieur que de façon contrôlée, par l'intermédiaire d'organes prévus à cet effet, telle qu'une soupape de régulation de pression par exemple.

Ces appareils connus sont généralement destinés à fonctionner dans des gammes de pression interne importante, susceptibles de développer une puissance destructrice considérable. C'est la raison pour laquelle ces appareils sont habituellement dotés d'une soupape de sécurité à la surpression, destinée à permettre une décompression de l'enceinte en cas de défaillance de la soupape de régulation (si cette dernière vient par exemple à être obstruée ou coincée), pour éviter toute explosion de l'enceinte sous l'effet d'une augmentation excessive de la pression interne.

Afin de garantir une sécurité maximale à l'utilisateur, il est préférable de prévoir une redondance de moyens de sécurité, c'est-à-dire de doter ces appareils de cuisson sous pression non seulement d'une soupape de sécurité à la surpression mais également d'un moyen de sécurité à la surpression supplémentaire, capable de provoquer une décompression de l'enceinte lorsqu'à la fois la soupape de régulation et la soupape de sécurité à la surpression sont défaillantes.

En particulier, il est connu de provoquer une fuite de vapeur au niveau du joint lorsque la pression a atteint un niveau anormal au-delà duquel la sécurité de l'utilisateur est susceptible d'être mise en danger

A cet effet, on connaît par exemple des systèmes dits « *à extrusion de joint* », selon lesquels une fenêtre est ménagée dans le couvercle, au droit du joint d'étanchéité, de façon que sous l'effet de la surpression le joint traverse la fenêtre (on parle alors d' « *extrusion »* du joint) ce qui engendre une perte d'étanchéité et donc une décompression de l'enceinte. On connaît également des autocuiseurs associant un trou ménagé dans le couvercle et un joint d'étanchéité pourvu d'un affaiblissement local, de telle sorte que tant que la pression régnant dans l'enceinte est inférieure à une valeur prédéterminée de sécurité le joint masque le trou, et que dès que la pression excède la valeur prédéterminée de sécurité le joint se déforme localement pour dégager le trou et autoriser ainsi une fuite de décompression de l'enceinte par ledit trou.

Ces dispositions constructives connues donnent certes satisfaction du point de vue de la sécurité de l'utilisateur mais présentent différents inconvénients, et en particulier les inconvénients exposés dans ce qui suit.

En premier lieu, les solutions de l'art antérieur décrites dans ce qui précède sont essentiellement basées sur un comportement spécifique de la pièce en matériau élastomère formant le joint d'étanchéité. Cela implique en particulier, afin d'obtenir un résultat suffisamment fiable et répétitif, de maîtriser précisément les caractéristiques physico-chimiques de l'élastomère formant le joint d'une part, ainsi que les tolérances de fabrication des différentes pièces formant l'autocuiseur d'autre part, lesdites pièces devant présenter en outre des caractéristiques géométriques spécifiques qui peuvent s'avérer contraignantes selon la forme et la destination que l'on entend donner à l'appareil.

Ce principe connu de sécurité ultime à la surpression nécessite en définitive une mise au point spécifique et relativement complexe pour chaque modèle d'autocuiseur. En d'autres termes, les mesures techniques exposées ci-avant et mises en oeuvre dans l'art antérieur s'avèrent complexes à mettre au point, et relativement difficiles et peu économiques à industrialiser.

En outre, les principes de sécurité à la surpression décrits dans ce qui précède ne sont pas directement adaptables à certains types d'autocuiseurs, en particulier aux autocuiseurs à couvercle rentrant. Les autocuiseurs à couvercle rentrant ont la particularité d'être pourvus d'un couvercle qui est muni d'un bord annulaire tombant destiné à être inséré à l'intérieur de la cuve, en regard de la face interne de la paroi latérale de ladite cuve. Dans ces autocuiseurs, le joint d'étanchéité enserre le bord tombant, de sorte que ledit joint est interposé entre la paroi latérale et le bord tombant. Plus précisément, on connaît des autocuiseurs à couvercle rentrant dont la paroi latérale s'évase vers le haut, c'est-à-dire qu'elle présente en partie supérieure une forme sensiblement tronconique destinée à former une zone d'appui pour le joint d'étanchéité. Le joint de ces appareils connus enserre le bord tombant du couvercle et vient s'écraser contre la face interne de la portion tronconique de la paroi latérale pour réaliser ainsi une enceinte de cuisson étanche. Cet autocuiseur connu est conçu pour que son couvercle subisse, sous l'effet d'une surpression, une déformation vers le haut ayant tendance à l'éloigner du fond de la cuve. Sous l'effet d'une surpression, le couvercle a ainsi tendance à s'éloigner de la cuve, entraînant avec lui le joint d'étanchéité qui encercle son bord tombant. Lorsque la pression atteint une valeur prédéterminée de sécurité, le couvercle est suffisamment déformé pour engendrer une perte de contact entre le joint et la paroi latérale, cette perte de contact permettant une fuite de vapeur de l'intérieur de l'enceinte vers l'extérieur, ladite fuite permettant de stabiliser et limiter le niveau de pression dans l'enceinte.

Cette disposition technique, si elle donne là encore satisfaction du point de vue de la sécurité de l'utilisateur, repose néanmoins elle aussi pour l'essentiel sur le comportement du joint, et donc en particulier sur la maîtrise des caractéristiques physico-chimiques de ce dernier, avec tous les inconvénients que cela engendre comme expliqué dans ce qui précède.

En outre, ce principe de sécurité à la surpression nécessite, afin d'être fiable et répétitif, une déformation particulièrement importante du couvercle afin de compenser le caractère peu précis, peu fiable et peu répétitif du comportement en déformation du joint en élastomère. Ce haut niveau de déformabilité du couvercle, nécessaire pour obtenir une fonction de sécurité à la surpression parfaitement fiable, engendre toutefois un inconvénient non négligeable en fonctionnement normal. En effet, du fait de ce haut niveau de déformabilité, la déformation du couvercle est conséquente même dans des plages de pression normale, c'est-à-dire qu'elle est en tout cas suffisamment importante pour être remarquée par l'utilisateur. Une telle déformation en fonctionnement normal, si elle est tout à fait acceptable d'un point de vue technique, n'en constitue pas moins un sérieux désavantage car elle est de nature à inquiéter l'utilisateur, ce qui est bien entendu particulièrement regrettable compte-tenu du caractère grand public de ces appareils.

Le haut niveau de déformabilité requis pour le couvercle nécessite en outre, pour être atteint, une conception spécifique de l'ensemble de l'appareil, avec en particulier un moyen de verrouillage du couvercle sur la cuve qui réalise une liaison suffisamment souple entre la cuve et le couvercle. La mise en oeuvre du moyen de sécurité ultime à la surpression décrit ci-avant impose donc des contraintes de conception importantes, et interdit en particulier la mise en oeuvre d'un moyen de verrouillage du couvercle réalisant une liaison plus rigide que celle de l'art antérieur.

Les objets assignés à l'invention visent en conséquence à remédier aux différents inconvénients énumérés précédemment et à proposer un nouvel appareil domestique de cuisson d'aliments sous pression qui tout en procurant une excellente sécurité globale d'utilisation est de conception simple, fiable, facile à industrialiser et bon marché.

Un autre objet de l'invention vise à proposer un nouvel appareil domestique de cuisson d'aliments sous pression qui présente une fonction de sécurité ultime à la surpression présentant un caractère particulièrement précis et répétitif.

Un autre objet de l'invention vise à proposer un nouvel appareil domestique de cuisson d'aliments sous pression dont la conception générale repose sur des principes simples et éprouvés.

Un autre objet de l'invention vise à proposer un nouvel appareil domestique de cuisson d'aliments sous pression de construction particulièrement simple, robuste et économique.

Un autre objet de l'invention vise à proposer un nouvel appareil domestique de cuisson d'aliments sous pression dont le fonctionnement n'est pas anxiogène pour l'utilisateur.

Les objets assignés à l'invention sont atteints à l'aide d'un appareil domestique de cuisson d'aliments sous pression comprenant :
- une cuve pourvue d'un fond et d'une paroi latérale s'élevant à partir dudit fond et délimitant une ouverture,
- un couvercle destiné à être associé à la cuve pour former avec cette dernière une enceinte de cuisson,
- un joint d'étanchéité interposé entre la paroi latérale et le couvercle, ledit joint étant conçu pour être en contact avec la paroi latérale tant que la pression régnant au sein de l'enceinte n'excède pas une valeur prédéterminée de sécurité, de façon à conférer à l'enceinte de cuisson un caractère sensiblement étanche,
   ledit appareil étant conçu pour que lorsque la pression régnant dans l'enceinte atteint la valeur prédéterminée de sécurité, le joint se déplace au moins localement relativement à la paroi latérale jusqu'à atteindre une position prédéterminée de sécurité, ledit appareil étant caractérisé en ce que d'une part ledit couvercle comprend un corps principal à partir et à la périphérie duquel s'étend un bord tombant, le bord tombant étant conçu pour être disposé à l'intérieur de la cuve et être entouré par la paroi latérale lorsque le couvercle est rapporté sur la cuve, et d'autre part la paroi latérale comprend au moins une irrégularité géométrique conçue pour interagir avec le joint lorsque ce dernier se trouve dans sa position prédéterminée de sécurité de manière à interrompre, au voisinage de l'irrégularité, le contact entre le joint et la paroi latérale et autoriser ainsi une fuite de vapeur de l'intérieur de l'enceinte vers l'extérieur.

D'autres particularités et avantages de l'invention apparaîtront et ressortiront plus en détails à la lecture de la description qui suit, ainsi qu'à l'aide des dessins annexés fournis à titre purement illustratifs et non limitatifs, parmi lesquels :

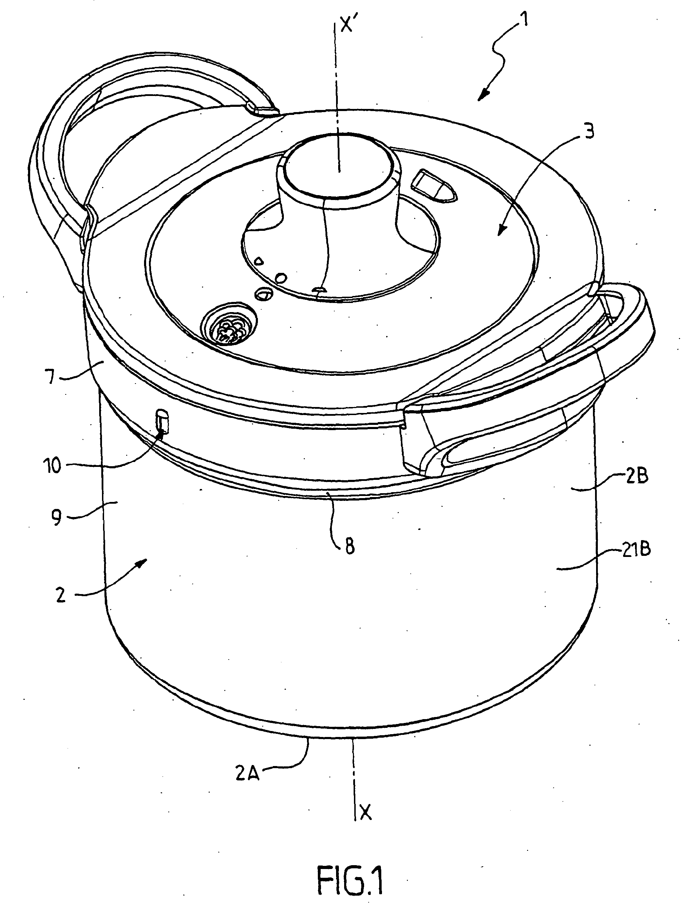

- La figure 1 illustre, selon une vue générale en perspective, un autocuiseur domestique conforme à l'invention.
- La figure 2 illustre, selon une vue générale en perspective partiellement coupée selon deux plans de coupe sensiblement perpendiculaires, l'autocuiseur de la figure 1.
- La figure 3 illustre, selon une vue de dessus en coupe partielle, l'autocuiseur des figures 1 et 2 avec son couvercle rapporté et verrouillé sur sa cuve.
- La figure 4 illustre, selon une vue de dessus en coupe partielle, l'autocuiseur des figures 1 à 3 avec son couvercle rapporté et déverrouillé sur sa cuve.
- La figure 5 illustre, selon une vue schématique en coupe, le positionnement du joint relativement à la cuve et au couvercle lorsque la valeur de la pression régnant dans l'enceinte est située dans une plage normale de fonctionnement.
- La figure 6 illustre, selon une vue schématique en coupe, l'interaction du joint avec l'irrégularité géométrique dont est dotée la paroi latérale lorsque la pression atteint la valeur prédéterminée de sécurité.

L'invention concerne un appareil de cuisson 1 destiné à assurer la cuisson d'aliments (par exemple de légumes, fruits, viandes ou poissons) sous pression, dans un contexte domestique. L'appareil 1 domestique de cuisson d'aliments sous pression est de préférence constitué par un autocuiseur.

Conformément à l'invention, l'appareil 1 comprend une cuve 2 formant récipient de cuisson et présentant avantageusement sensiblement une symétrie de révolution selon un axe X-X'. Par la suite, l'adjectif « *axial »* se réfèrera à la direction de cet axe de symétrie X-X', direction qui s'apparente à la direction verticale lorsque l'appareil est en fonctionnement normal. La cuve 2 est par exemple et de manière classique fabriquée par emboutissage d'un flan en matériau métallique, tel que l'aluminium ou l'acier inoxydable.

La cuve 2 est pourvue d'un fond 2A, de préférence sensiblement plat, destiné à reposer sur un moyen de chauffage, tel qu'une plaque de cuisson par exemple. La cuve 2 comprend également une paroi latérale 2B s'élevant à partir du fond 2A, à la périphérie de ce dernier.

De préférence et comme illustré aux figures, la paroi latérale 2B s'étend globalement verticalement à partir du fond 2A, entre une extrémité inférieure liée au fond 2A et une extrémité supérieure libre délimitant une ouverture supérieure d'accès 2C à l'intérieur de la cuve 2, pour permettre en particulier l'introduction des aliments dans la cuve 2, la paroi latérale 2B délimitant ainsi l'ouverture 2C. Avantageusement, ladite paroi latérale 2B s'étend majoritairement selon un axe parallèle à l'axe X-X'. En d'autres termes, ladite paroi latérale 2A présente un axe d'extension sensiblement vertical, parallèle à l'axe X-X'. Dans l'exemple illustré aux figures, le fond 2A présente une forme discoïde, et la paroi latérale 2B une forme sensiblement annulaire de révolution, ladite paroi latérale 2B présentant une face interne 20B s'étendant en regard de l'intérieur de la cuve 2 et une face externe 21 B opposée s'étendant en regard de l'extérieur de l'appareil 1.

L'appareil domestique 1 conforme à l'invention comprend également un couvercle 3 destiné à être associé à la cuve 2 pour former avec cette dernière une enceinte de cuisson. A cette fin, le couvercle 3 est conçu pour obturer, lorsqu'il est associé à la cuve 2, l'ouverture supérieure 2C délimitée par le bord libre supérieur de la paroi latérale 2B.

Le couvercle 3 est de préférence réalisé en un matériau métallique tel que l'aluminium ou l'acier inoxydable. Dans l'exemple préférentiel illustré aux figures, le couvercle 3 présente une forme globale discoïde complémentaire de celle de la cuve 2.

L'appareil domestique de cuisson 1 comprend en outre, conformément à l'invention, un joint d'étanchéité 4 qui présente avantageusement une forme annulaire d'axe de symétrie X-X', et qui est interposé entre la paroi latérale 2B de la cuve 2 et le couvercle 3, comme illustré aux figures.

Le joint d'étanchéité 4 est réalisé de préférence en un matériau élastomère, et présente avantageusement un caractère souple et élastique.

Le joint d'étanchéité 4 est conçu pour être en contact avec la paroi latérale 2B tant que la pression régnant au sein de l'enceinte formée par la cuve 2 et le couvercle 3 n'excède pas une valeur prédéterminée de sécurité, de façon à conférer à l'enceinte de cuisson un caractère sensiblement étanche, c'est-à-dire suffisamment hermétique pour permettre une montée et un maintien en pression de l'enceinte.

La valeur prédéterminée de sécurité correspond à un niveau de pression au-delà duquel le fonctionnement de l'appareil de cuisson 1 est anormal et peut présenter un risque pour l'utilisateur. Tant que la pression interne régnant au sein de l'enceinte de cuisson est inférieure à cette valeur prédéterminée de sécurité, le joint d'étanchéité 4 est en contact étanche d'une part avec la paroi latérale 2B et d'autre part avec le couvercle 3 de telle sorte que la pression régnant dans l'enceinte peut être nettement supérieure à la pression atmosphérique, et par exemple excéder ladite pression atmosphérique d'une valeur supérieure ou égale à 10 kPa, et de préférence supérieure ou égale à 20 kPa. Il est également tout à fait envisageable, afin de permettre une cuisson très rapide et efficace, que l'enceinte soit conçue pour que la pression régnant en son sein puisse excéder la pression atmosphérique d'une valeur sensiblement comprise entre 40 et 110 kPa, et de préférence sensiblement comprise entre 50 et 100 kPa.

Avantageusement, l'appareil domestique 1 conforme à l'invention comprend un moyen de régulation de pression, du genre soupape, agencé pour maintenir la pression relative régnant dans l'enceinte à une valeur prédéterminée sensiblement constante dite pression de fonctionnement. De préférence, l'appareil 1 comprend en outre une soupape de sécurité destinée à assurer la stabilisation et la limitation de la pression au sein de l'appareil 1 en cas de défaillance de la soupape de régulation.

Le couvercle 3 peut être verrouillé sur la cuve 2 pour permettre une montée en pression de l'enceinte sans échappement intempestif du couvercle 3 sous l'effet de la pression. A cette fin, l'appareil 1 comprend avantageusement un moyen de verrouillage 5 du couvercle 3 sur la cuve 2 conçu pour fixer le couvercle 3 à la cuve 2.

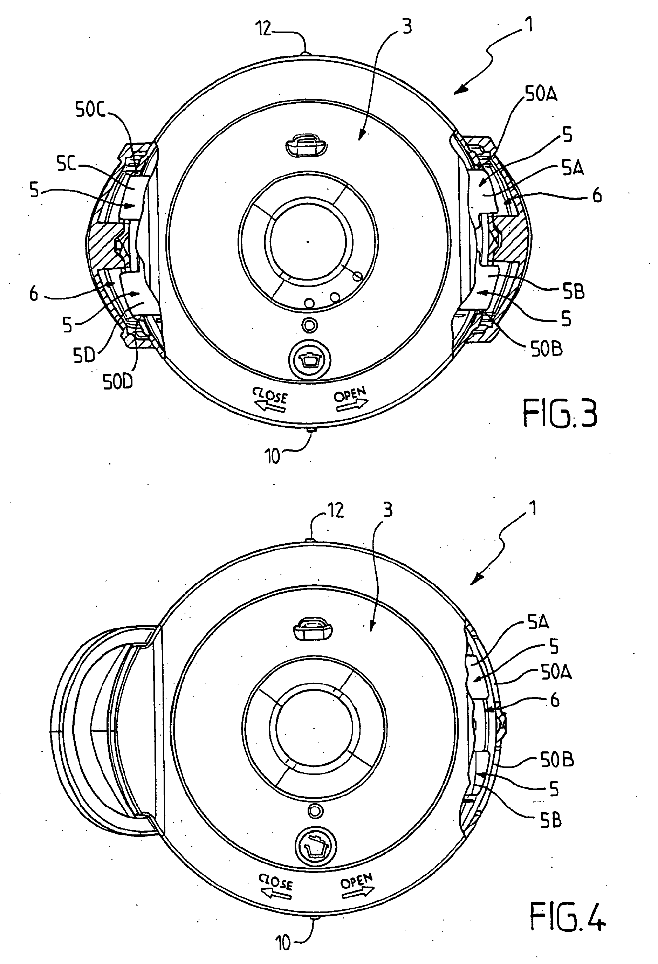

Le moyen de verrouillage 5 du couvercle 3 sur la cuve 2 peut être de tout type connu de l'homme du métier, et est de préférence conçu pour assujettir localement le couvercle 3 à la cuve 2 en une pluralité de zones d'assujettissement 6, lesdites zones 6 étant de préférence localisées, c'est-à-dire qu'elles ne s'étendent pas sur toute la circonférence de l'ouverture supérieure 2C. De préférence, le moyen de verrouillage 5 est un moyen de verrouillage activable / désactivable par l'utilisateur, c'est-à-dire qu'il est susceptible d'évoluer entre une configuration de verrouillage du couvercle 3 relativement à la cuve 2 (illustrée à la figure 3) dans laquelle le couvercle 3 est solidarisé à la cuve 2, et une configuration de déverrouillage du couvercle 3 relativement à la cuve 2 (illustrée notamment à la figure 4), dans laquelle le couvercle peut être librement séparé de la cuve 2, de façon manuelle par l'utilisateur.

De préférence, le moyen de verrouillage 5 comprend au moins un élément de verrouillage 5A, 5B, 5C, 5D monté mobile sur le couvercle 3, sensiblement en translation radiale par rapport à l'axe de symétrie X-X' entre une position annexée de verrouillage illustrée à la figure 3 et une position annexée de déverrouillage illustrée à la figure 4. Selon le mode de réalisation préféré illustré aux figures, les éléments de verrouillage 5A, 5B, 5C, 5D sont constitués respectivement par des pênes de verrouillage groupés par paires, lesdites paires de pênes étant disposées de manière diamétralement opposée en regard de l'axe de symétrie général X-X' de l'appareil 1, comme illustré aux figures.

Des ouvertures de verrouillage 50A, 50B, 50C, 50D complémentaires aux pênes 5A, 5B, 5C, 5D sont ménagées dans la cuve 2, à travers la paroi latérale 2B, de telle sorte que le verrouillage du couvercle 3 correspond à l'engagement des pênes 5A, 5B, 5C, 5D dans les ouvertures complémentaires respectives 50A, 50B, 60A, 60B (cf. figure 3), à la manière d'un système de serrure pênes/gâches, pour empêcher sensiblement tout mouvement du couvercle 3 par rapport à la cuve 2, tandis que le déverrouillage du couvercle 3 correspond à la rétractation et au désengagement des pênes 5A, 5B, 5C, 5D hors des lumières formant les ouvertures 50A, 50B, 60A, 60B correspondantes pour que lesdits pênes 5A, 5B, 5C, 5D ne coopèrent plus avec lesdites lumières 50A, 50B, 60A, 60B.

Un tel moyen de verrouillage reposant sur l'engagement de segments (pênes) de verrouillage dans des ouvertures complémentaires ménagées dans la cuve est notamment intéressant du point de vue mécanique, car il permet un assemblage particulièrement rigide, fiable et sécurisé du couvercle 3 sur la cuve 2 tout en étant particulièrement simple à manoeuvrer.

Le moyen de verrouillage 5 du couvercle 3 sur la cuve 2 n'est cependant pas limité à un tel système à segments et peut reposer, de manière alternative, sur d'autres principes sans pour autant que l'on sorte du cadre de l'invention. Par exemple, le moyen de verrouillage 5 du couvercle 3 sur la cuve 2 peut être basé sur un système à baïonnettes, à mâchoires ou à étriers.

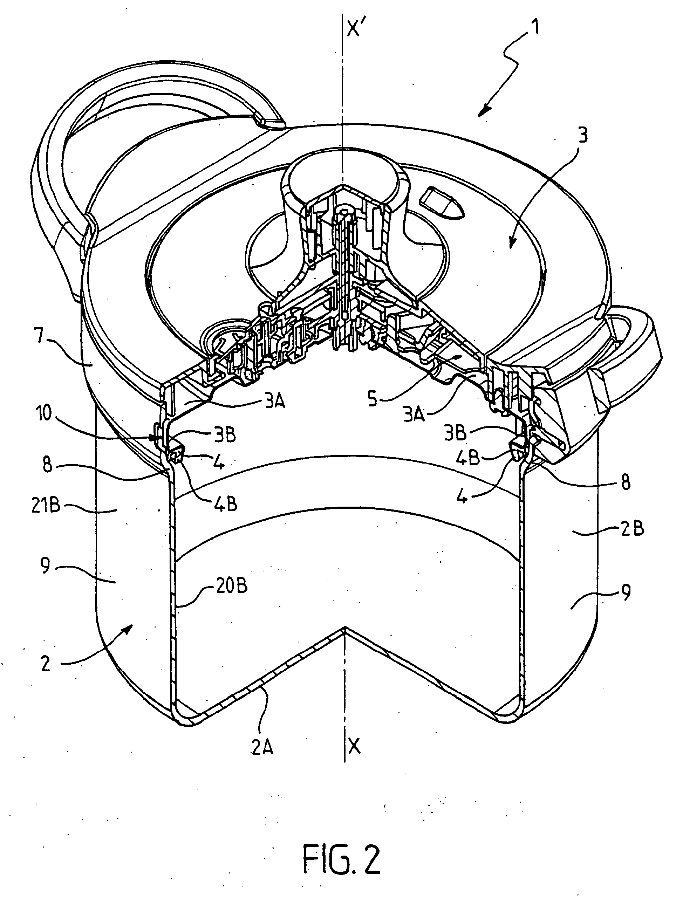

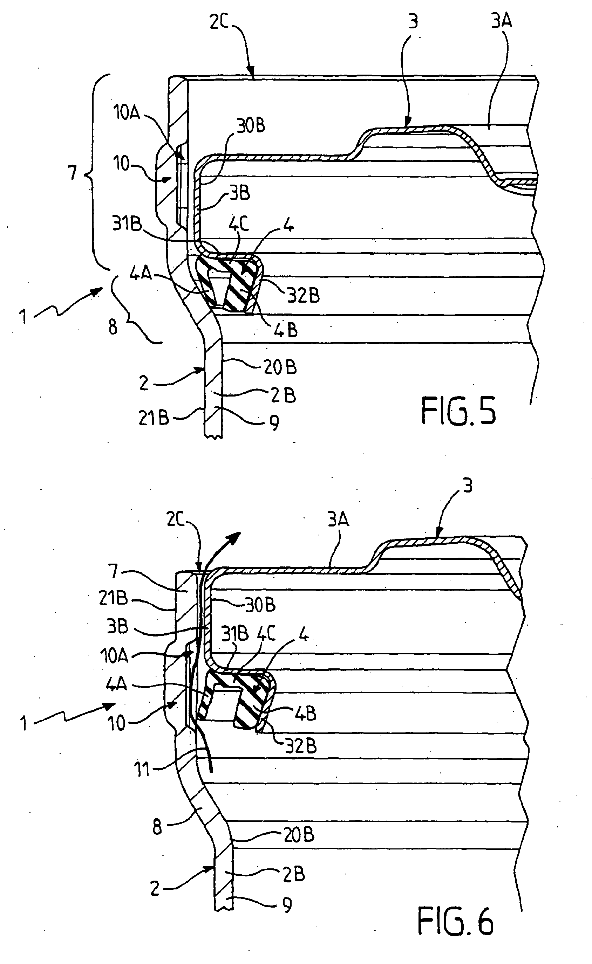

Tel que cela est notamment visible aux figures 2 et 5, le joint d'étanchéité 4 est conçu pour être en contact avec la face interne 20B de la paroi latérale 2B en fonctionnement normal, c'est-à-dire lorsque le couvercle 3 est rapporté sur la cuve 2 et tant que la pression régnant dans l'enceinte n'excède pas la valeur prédéterminée de sécurité.

De préférence, et comme illustré aux figures, le joint d'étanchéité 4 est attaché au couvercle 3, c'est-à-dire qu'il est monté sur ledit couvercle 3 pour former avec ce dernier un sous-ensemble unitaire.

Avantageusement, le couvercle 3 comprend un corps principal 3A, de forme générale sensiblement discoïde, à partir et à la périphérie duquel s'étend un bord tombant 3B, le joint d'étanchéité 4 enserrant ledit bord tombant 3B. En d'autres termes, selon ce mode de réalisation préféré (illustré aux figures), le joint 4 encercle élastiquement le bord tombant 3B. Comme cela est illustré aux figures, le corps principal 3A du couvercle 3 s'étend de préférence globalement parallèlement au fond 2A de la cuve 2 lorsque le couvercle 3 est rapporté sur la cuve 2, tandis que le bord tombant 3B s'étend verticalement vers le bas, c'est-à-dire globalement parallèlement à l'axe de symétrie X-X' général de l'appareil 1. De préférence, le joint d'étanchéité 4 entoure le bord tombant 3B, de sorte que ledit joint 4 est interposé entre la paroi latérale 2B et le bord tombant 3B.

Avantageusement, l'appareil 1 est un appareil à couvercle rentrant, c'est-à-dire que le bord tombant 3B est conçu pour être disposé à l'intérieur de la cuve 2, comme illustré aux figures 5 et 6, et être entouré par la paroi latérale 2B lorsque le couvercle 3 est rapporté sur la cuve 2. En d'autres termes, lors de la fermeture de l'appareil 1, le bord tombant 3B est introduit dans la cuve 2, de manière à ce qu'il soit disposé en regard de la face interne 20B de la paroi latérale 2B de ladite cuve 2. Bien entendu, l'invention n'est en aucune façon limitée à un couvercle rentrant et peut mettre en oeuvre tout autre type de couvercle (couvercle coiffant classique, couvercle pour trou d'homme, etc.).

Dans l'exemple illustré aux figures, le diamètre de la cuve 2 au niveau de l'ouverture supérieure 2C est légèrement supérieur à celui du couvercle 3 pour permettre l'introduction complète de ce dernier à l'intérieur de la cuve 2. Afin de former une surface d'appui étanche pour le joint 4, la cuve 2 présente une restriction de section, constituée par exemple par une conformation tronconique de la paroi latérale 2B.

La paroi latérale 2B est ainsi constituée, dans l'exemple illustré aux figures, d'une première portion droite 7 s'étendant verticalement à partir du bord libre de la paroi latérale 2B, ladite première portion droite 7 se prolongeant vers le bas par une portion tronconique 8 convergeant vers l'intérieur de la cuve 2.

La portion tronconique fait office de butée d'arrêt pour le joint d'étanchéité 4, lequel est destiné à venir en appui étanche contre ladite portion tronconique 8. La portion tronconique 8 est ensuite elle-même prolongée vers le bas par une seconde portion sensiblement droite 9 qui s'étend verticalement jusqu'au fond 2A de la cuve 2.

Bien entendu, l'invention n'est pas limitée à la mise en oeuvre d'une cuve 2 de forme évasée. Il est par exemple tout à fait envisageable que la cuve 2 présente une forme droite, c'est-à-dire que sa paroi latérale 2B s'élève verticalement de manière sensiblement rectiligne, perpendiculairement au fond 2A. Dans ce cas de figure (non illustrée), la restriction de section destinée à former une surface d'appui pour le joint 4 peut par exemple être formée par une déformation circulaire localisée de la paroi latérale 2B, de manière à constituer un bossage circulaire radial centripète.

Avantageusement, et comme illustré aux figures, le joint d'étanchéité 4 présente une section transversale en forme de U, les bras du U formant chacun respectivement une première et une deuxième lèvre 4A, 4B, tandis que l'âme du U forme le talon 4C du joint. Dans le mode de réalisation illustré aux figures, la première lèvre 4A est destinée à venir en contact avec la paroi latérale 2B, et plus précisément avec la face interne 20B de la paroi latérale 2B, au niveau de la portion tronconique 8, tandis que la deuxième lèvre 4B est destinée à venir en contact avec le couvercle 3, et de préférence enserre le bord tombant 3B. Afin d'obtenir un maintien en position satisfaisant du joint 4 relativement au couvercle 3, le bord tombant 3B présente avantageusement une conformation d'accueil du joint 4, formée de la manière suivante :
- le bord tombant 3B s'étend, à partir de la périphérie du corps principal 3A selon une première portion sensiblement verticale 30B ;
- la première portion verticale 30B est prolongée par un bord rentrant horizontal 31 B contre la surface extérieure duquel est destiné à venir en appui le talon 4C du joint 4 ;
- le bord rentrant horizontal 31 B est lui-même prolongé par un bord terminal 32B qui s'étend sensiblement vers le bas, et en oblique vers l'extérieur et constitue une zone d'appui pour la deuxième lèvre 4B du joint 4.

Conformément à l'invention, l'appareil 1 est conçu pour que lorsque la pression régnant dans l'enceinte atteint la valeur prédéterminée de sécurité, le joint 4 se déplace au moins localement relativement à la paroi latérale 2B jusqu'à atteindre une position prédéterminée de sécurité, illustrée à la figure 6. En d'autres termes, l'autocuiseur 1 est conçu pour que sous l'effet de la force motrice exercée par la pression régnant au sein de l'enceinte, le joint 4 quitte sa configuration normale de fonctionnement (illustrée à la figure 5) dans laquelle il assure un contact étanche entre la cuve 2 et le couvercle 3 pour évoluer vers une configuration prédéterminée de sécurité qu'il atteint dès que la pression atteint la valeur prédéterminée de sécurité représentative d'un fonctionnement anormal de l'appareil 1, dû par exemple à un défaut de fonctionnement des soupapes de régulation et de sécurité. Bien entendu, le déplacement du joint 4 peut n'être que local, auquel cas le passage du joint 4 de sa configuration illustrée à la figure 5 à celle illustrée à la figure 6 s'effectue par une déformation dudit joint 4, et non un déplacement global de ce dernier.

Dans le mode de réalisation illustré aux figures, le couvercle 3 est conçu pour se déplacer, au moins localement, sous l'effet de l'augmentation de la pression régnant dans l'enceinte et entraîner dans son déplacement le joint 4 de façon à amener ce dernier dans sa position prédéterminée de sécurité lorsque ladite pression atteint la valeur prédéterminée de sécurité. En d'autres termes, sous l'effet de l'augmentation de la pression dans l'enceinte, le couvercle 3 se déplace relativement à la paroi latérale 2B, de préférence sensiblement parallèlement à l'axe de symétrie X-X', et entraîne dans son déplacement le joint d'étanchéité 4 qui lui est attaché.

De préférence, le déplacement du couvercle 3 est un déplacement local, c'est-à-dire une déformation. Par exemple, dans le mode de réalisation illustré aux figures, la portion du couvercle 3 située au voisinage des zones d'assujettissement 6 ne subit sensiblement aucun déplacement, tandis qu'au contraire les zones du couvercle 3 les plus éloignées desdites zones d'assujettissement 6 fléchissent vers le haut, ce mouvement de flexion localisé du couvercle 3 entraînant localement le joint 4 vers le haut. En d'autres termes, dans le mode de réalisation illustré, le joint 4 est, en fonctionnement normal, en appui par sa première lèvre 4A contre la paroi latérale 2B, selon une ligne d'étanchéité globalement circulaire. Sous l'effet de l'augmentation de la pression, les zones du couvercle 3 les plus éloignées des zones d'assujettissement 6 vont fléchir vers le haut, et ainsi entraîner vers le haut (c'est-à-dire éloigner du fond 2A) localement le joint 4.

Par conséquent, la position prédéterminée de sécurité du joint 4 est pour l'essentiel dépendante, dans l'exemple illustré aux figures, des caractéristiques mécaniques de flexion du couvercle 3, et donc des caractéristiques physico-chimiques du matériau formant ce couvercle 3. Pour des raisons de résistance thermomécanique, le matériau formant le couvercle est de préférence métallique, et présente donc une grande fiabilité, précision et répétabilité dans son comportement en déformation.

Conformément à l'invention, la paroi latérale 2B comprend au moins une irrégularité géométrique 10 conçue pour interagir avec le joint 4 lorsque ce dernier se trouve dans sa position prédéterminée de sécurité (illustrée à la figure 6) de manière à interrompre, au voisinage de l'irrégularité 10, le contact entre le joint 4 et la paroi latérale 2B et autoriser ainsi une fuite de vapeur de l'intérieur de l'enceinte vers l'extérieur. Ladite fuite de vapeur est suffisante pour au moins permettre une limitation, et de préférence une stabilisation, de la valeur de la pression dans l'enceinte, afin d'éviter l'atteinte d'une valeur de pression susceptible de conduire à des phénomènes dangereux pour l'utilisateur.

La mise en oeuvre combinée d'une irrégularité géométrique disposée sur paroi latérale 2B et d'un couvercle 3 à bord tombant 3B disposé à l'intérieur de la cuve 2 est particulièrement intéressante car elle permet de diriger la fuite de vapeur vers le haut et non dans des directions (latéralement et/ou vers le bas) susceptibles d'entrainer un danger pour l'utilisateur. La face interne 20B de la paroi latérale 2B et la face externe 30C, 32C du bord tombant 3B constitue en effet un canal vertical 40 de sortie de vapeur.

De préférence, l'irrégularité géométrique 10 est agencée sur la paroi latérale 2B pour se trouver à distance de l'ouverture 2C de la cuve 2, c'est-à-dire qu'elle est séparée par une distance non nulle du bord supérieur libre de la paroi latérale 2B. En d'autres termes, l'irrégularité géométrique 10 est conçue pour être séparée de l'ouverture 2C de la cuve 2 par un tronçon 7A, de préférence sensiblement vertical, de la première portion droite 7 formant la partie supérieure de la paroi latérale 2B. En outre, avantageusement, l'irrégularité géométrique 10 est disposée sur une portion de la paroi latérale 2B s'étendant de manière sensiblement verticale, par exemple de préférence dans la première portion droite 7 de la paroi latérale 2B. La localisation de l'irrégularité 10 sur la paroi latérale 2B à distance de l'ouverture 2C de la cuve 2 est particulièrement intéressante en combinaison avec la mise en oeuvre d'un couvercle à bord rentrant 3B car elle permet de créer un chemin confiné de fuite de vapeur sensiblement vertical, entre la paroi latérale 2B et le bord tombant 3B du couvercle 3, ce qui évite une fuite de vapeur directe, potentiellement violente, voire dangereuse pour l'utilisateur.

Plus précisément, l'utilisation d'un couvercle 3 à bord rentrant 3B sur la cuve 2 comprenant une irrégularité géométrique 10 située à distance de l'ouverture 2C permet de mettre en communication l'intérieur de la cuve 3 avec l'extérieur non pas directement mais par l'intermédiaire du canal vertical 40 situé entre la face externe 30C, 32C du bord tombant 3 et la face interne 20B de la paroi latérale 2B.

La présente invention concerne ainsi également, en tant que tel, un appareil 1 domestique de cuisson d'aliments sous pression comprenant :
- une cuve 2 pourvue d'un fond 2A, d'une paroi latérale 2B s'élevant à partir dudit fond 2A et délimitant une ouverture 2C,
- un couvercle 3 destiné à être associé à la cuve 2 pour former avec cette dernière une enceinte de cuisson,
- un joint d'étanchéité 4 interposé entre la paroi latérale 2B et le couvercle 3, ledit joint 4 étant conçu pour être en contact avec la paroi latérale 2B tant que la pression régnant au sein de l'enceinte n'excède pas une valeur prédéterminée de sécurité, de façon à conférer à l'enceinte de cuisson un caractère sensiblement étanche,
ledit appareil 1 étant conçu pour que lorsque la pression régnant dans l'enceinte atteint la valeur prédéterminée de sécurité, le joint 4 se déplace au moins localement relativement à la paroi latérale 2B jusqu'à atteindre une position prédéterminée de sécurité, ledit appareil 1 étant caractérisé en ce que la paroi latérale 2B comprend au moins une irrégularité géométrique 10, 12 agencée sur ladite paroi latérale 2B à distance de l'ouverture 2C de la cuve 2 et conçue pour interagir avec le joint 4 lorsque ce dernier se trouve dans sa position prédéterminée de sécurité de manière à interrompre, au voisinage de l'irrégularité 10, 12, le contact entre le joint 4 et la paroi latérale 2B et autoriser ainsi une fuite de vapeur de l'intérieur de l'enceinte vers l'extérieur.

Le principe général de l'invention repose sur l'obtention d'une sécurité ultime à la surpression obtenue par coopération du joint 4 avec une singularité de conformation de la paroi latérale 2B de la cuve 2, cette coopération entraînant une perte de contact, au moins locale, entre le joint 4 et la paroi latérale 2B.

Cette perte de contact engendre une mise en communication de l'intérieur de l'enceinte avec l'extérieur, permettant une fuite de vapeur vers l'extérieur, matérialisée par la flèche 11 sur la figure 6.

Ainsi, dans l'exemple illustré aux figures, lorsque la pression régnant dans l'enceinte atteint la valeur prédéterminée de sécurité, le joint 4 s'éloigne au moins localement du fond 2A de la cuve 2 pour qu'au moins une portion dudit joint 4 se retrouve à une distance prédéterminée dudit fond 2A, l'irrégularité géométrique 10 étant positionnée sur la paroi latérale 2B, de préférence sur la première portion droite 7 majoritairement verticale de la paroi latérale 2B, à une distance correspondant sensiblement à ladite distance prédéterminée, l'irrégularité géométrique 10 se trouvant de préférence également éloignée de l'ouverture 2C d'une distance correspondant à la hauteur du tronçon 7A. En d'autres termes, l'augmentation de la pression au sein de l'enceinte va entraîner le joint 4 vers le haut jusqu'à ce que ce dernier vienne en regard de l'irrégularité géométrique 10, la mise en regard du joint 4 et de l'irrégularité géométrique 10 entraînant la réalisation d'un chemin de passage pour la vapeur contenue dans l'enceinte de cuisson vers l'extérieur, qui engendre une décompression de l'appareil 1.

Dans le mode de réalisation illustré aux figures, l'appareil 1 comprend deux irrégularités géométriques 10, 12 disposées de manière diamétralement opposée sur la paroi latérale 2B relativement à l'axe de symétrie général X-X' de l'appareil 1. De préférence, chaque irrégularité géométrique 10, 12 est disposée le plus loin possible des zones d'assujettissement 6, de manière à se trouver en regard d'une portion du couvercle 3 susceptible d'être soumise à une déformation la plus importante possible sous l'effet de la pression.

Par exemple, comme illustré aux figures, les deux irrégularités géométriques 10, 12 seront de préférence disposées angulairement à 90° des zones d'assujettissement 6 de manière à se trouver en regard de la portion de couvercle 3 qui est susceptible de subir les déformations les plus importantes.

De préférence, chaque irrégularité géométrique 10, 12 comprend au moins un creux 10A ménagé dans la paroi latérale 2B. Le creux 10A est avantageusement suffisamment profond et localisé pour que lorsque le joint 4 se trouve en regard dudit creux 10A, la première lèvre 4A dudit joint ne puisse atteindre au moins localement le fond du creux 10A, c'est à dire qu'elle ne puisse épouser partout le profil du creux 10, ce qui entraîne une perte de contact étanche, comme illustré aux figures 5 et 6 et donc une fuite localisée de vapeur. Dans l'exemple d'appareil 1 illustré aux figures, qui comprend deux irrégularités géométriques diamétralement opposées, une double perte de contact étanche peut être obtenue, ce qui entraîne la création de deux zones de fuite localisée de vapeur.

Avantageusement, le creux 10A est formé par une déformation localisée de la paroi latérale 2B, de l'intérieur de la cuve 2 vers l'extérieur comme illustré aux figures. Le creux 10A est par exemple obtenu par une opération de pressage réalisée à partir de la face interne 20B de la paroi latérale 2B de la cuve 2, permettant ainsi un enfonçage vers l'extérieur de ladite paroi latérale 2B. L'intérêt d'une telle construction est bien évidemment industriel et économique, puisqu'une telle opération d'enfonçage est particulièrement simple, rapide et économique à réaliser dans l'environnement industriel de fabrication de la cuve 2.

Bien entendu, l'invention n'est pas limitée à la mise en oeuvre d'un creux formant irrégularité géométrique, et il est par exemple tout à fait envisageable que ladite irrégularité géométrique 10 soit réalisée par une bossette faisant saillie sur la face interne 20B de la paroi latérale 2B, ladite bossette étant suffisamment élevée et localisée pour que le joint 4 ne puisse en épouser complètement le contour ce qui engendre ainsi une perte d'étanchéité locale.

L'irrégularité géométrique 10 peut également être réalisée par une pièce rapportée ou être constituée par un trou traversant toute l'épaisseur de la paroi latérale 2B. Dans ce dernier cas de figure, le trou est ménagé à travers la paroi latérale 2B pour d'une part être situé initialement en dehors de l'enceinte de cuisson (au-dessus de la ligne d'étanchéité du joint 4 ou sur cette dernière) tant que la pression est en deçà de la valeur prédéterminée de sécurité et d'autre part être mis en communication avec l'intérieur de l'enceinte de cuisson lorsque le joint 4 atteint localement son altitude correspondant à sa position prédéterminée de sécurité. Dans ce mode de réalisation, il est préférable de pourvoir le trou traversant d'un déflecteur de vapeur afin de protéger l'utilisateur.

En définitive, l'invention procure un moyen de sécurité ultime à la surpression particulièrement économique, dans la mesure où les pièces utilisées pour réaliser cette fonction sont quoiqu'il en soit nécessaires pour la construction de l'appareil 1, aucune pièce supplémentaire ou spécifique n'étant fondamentalement nécessaire.

De plus, l'invention repose sur un comportement mécanique spécifique de pièces métalliques, qui se déforment sous la pression. Or, le comportement en déformation de pièces métalliques est beaucoup plus précis, répétitif et prédictif que le comportement d'un joint en élastomère. Par conséquent, la valeur prédéterminée de la pression à laquelle s'opère la fuite de décompression peut être maîtrisée de façon particulièrement précise et fiable car elle n'est justement pas liée à des caractéristiques spécifiques de l'élastomère composant le joint 4.

L'irrégularité géométrique 10, dont le positionnement est maîtrisé par conception, permet également de limiter la déformation locale du couvercle 3 sous l'effet de la pression. En effet, dès que le joint 4 se trouve en regard du creux 10A une fuite de vapeur s'opère, qui engendre une baisse de pression et donc un retour du couvercle 3 vers sa position normale de fonctionnement illustrée à la figure 5.

Ainsi, en positionnant le creux 10A en un endroit suffisamment proche, en altitude, de la zone d'appui normale du joint 4 sur la paroi latérale 2B, à distance de l'ouverture 2C de la cuve 2, la déformation du couvercle 3 est limitée et est de ce fait peu ou pas perceptible par l'utilisateur.

## Revendications

1. Appareil (1) domestique de cuisson d'aliments sous pression comprenant :
- une cuve (2) pourvue d'un fond (2A) et d'une paroi latérale (2B) s'élevant à partir dudit fond (2A) et délimitant une ouverture (2C),
- un couvercle (3) destiné à être associé à la cuve (2) pour former avec cette dernière une enceinte de cuisson,
- un joint d'étanchéité (4) interposé entre la paroi latérale (2B) et le couvercle (3), ledit joint (4) étant conçu pour être en contact avec la paroi latérale (2B) tant que la pression régnant au sein de l'enceinte n'excède pas une valeur prédéterminée de sécurité, de façon à conférer à l'enceinte de cuisson un caractère sensiblement étanche,
ledit appareil (1) étant conçu pour que lorsque la pression régnant dans l'enceinte atteint la valeur prédéterminée de sécurité, le joint (4) se déplace au moins localement relativement à la paroi latérale (2B) jusqu'à atteindre une position prédéterminée de sécurité, ledit appareil (1) étant **caractérisé en ce que** d'une part ledit couvercle (3) comprend un corps principal (3A) à partir et à la périphérie duquel s'étend un bord tombant (3B), le bord tombant (3B) étant conçu pour être disposé à l'intérieur de la cuve (2) et être entouré par la paroi latérale (2B) lorsque le couvercle (3) est rapporté sur la cuve (2), et d'autre part la paroi latérale (2B) comprend au moins une irrégularité géométrique (10, 12) conçue pour interagir avec le joint (4) lorsque ce dernier se trouve dans sa position prédéterminée de sécurité de manière à interrompre, au voisinage de l'irrégularité (10, 12), le contact entre le joint (4) et la paroi latérale (2B) et autoriser ainsi une fuite de vapeur de l'intérieur de l'enceinte vers l'extérieur.

2. Appareil (1) selon la revendication 1 **caractérisé en ce que** la paroi latérale (2B) présente une face interne (20B) s'étendant en regard de l'intérieur de la cuve (2), ledit joint d'étanchéité (4) étant conçu pour être en contact avec ladite face interne (20B).

3. Appareil (1) selon la revendication 2 **caractérisé en ce que** le joint d'étanchéité (4) est attaché au couvercle (3).

4. Appareil (1) selon la revendication 3 **caractérisé en ce que** le couvercle (3) est conçu pour se déplacer, au moins localement, sous l'effet de l'augmentation de la pression régnant dans l'enceinte et entraîner dans son déplacement le joint (4) de façon à amener ce dernier dans sa position prédéterminée de sécurité lorsque ladite pression atteint la valeur prédéterminée de sécurité.

5. Appareil (1) selon l'une des revendications précédentes **caractérisé en ce que** le joint (4) enserre ledit bord tombant (3B).

6. Appareil (1) selon l'une des revendications 1 à 5 **caractérisé en ce que** le joint d'étanchéité (4) présente une section transversale en forme de U, les bras du U formant chacun respectivement une première et une deuxième lèvres (4A, 4B) tandis que l'âme du U forme le talon (4C) du joint (4), la première lèvre (4A) étant destinée à venir en contact avec la paroi latérale (2B) tandis que la deuxième lèvre (4B) est destinée à venir en contact avec le couvercle (3).

7. Appareil (1) selon la revendication 6 **caractérisé en ce que** la deuxième lèvre (4B) enserre le bord tombant (3B).

8. Appareil (1) selon l'une des revendications 1 à 7 **caractérisé en ce que** lorsque la pression régnant dans l'enceinte atteint la valeur prédéterminée de sécurité, le joint (4) s'éloigne au moins localement du fond (2A) de la cuve (2) pour qu'au moins une portion dudit joint (4) se retrouve à une distance prédéterminée dudit fond (2A), l'irrégularité géométrique (10, 12) étant positionnée sur la paroi latérale (2B) à une distance correspondant à ladite distance prédéterminée.

9. Appareil (1) selon l'une des revendications 1 à 8 **caractérisé en ce que** chaque irrégularité géométrique (10, 12) comprend au moins un creux (10A) ménagé dans la paroi latérale (2B).

10. Appareil (1) selon les revendications 2 et 9 **caractérisé en ce que** ledit creux (10A) est formé par une déformation localisée de la paroi latérale (2B), de l'intérieur de la cuve (2) vers l'extérieur.

11. Appareil (1) selon l'une des revendications 1 à 10 **caractérisé en ce qu'**il comprend un moyen de verrouillage (5) du couvercle (3) sur la cuve (2) conçu pour assujettir localement le couvercle (3) à la cuve (2) en une pluralité de zones d'assujettissement (6), chaque irrégularité géométrique (10, 12) étant disposée le plus loin possible des zones d'assujettissement (6).

12. Appareil (1) selon l'une des revendications 1 à 11 **caractérisé en ce que** l'irrégularité géométrique (10, 12) est agencée sur la paroi latérale (2B), à distance de l'ouverture (2C) de la cuve (2).

13. Appareil (1) selon l'une des revendications 1 à 12 **caractérisé en ce qu'**il est constitué par un autocuiseur.

## Claims

1. Household appliance (1) for cooking food under pressure, comprising:
- a bowl (2) with a bottom (2A) and a side wall (2B) rising up from said bottom (2A) and circumscribing an opening (2C),
- a lid (3) intended to be associated with the bowl (2) to form therewith a cooking chamber,
- a sealing gasket (4) interposed between the side wall (2B) and the lid (3), said gasket (4) being designed to be in contact with the side wall (2B) as long as the pressure inside the chamber does not exceed a predetermined safety value, so as to impart a substantial leaktightness to the cooking chamber,
said appliance (1) being designed so that, when the pressure inside the chamber reaches the predetermined safety value, the gasket (4) moves at least locally relative to the side wall (2B) up to reach a predetermined safety position, said appliance (1) being **characterized in that**, on the one hand, said lid (3) comprises a main body (3A) from which and at the periphery of which extends a falling edge (3B), the falling edge (3B) being designed to be disposed inside the bowl (2) and to be surrounded by the side wall (2B) when the lid (3) is fitted onto the bowl (2), and on the other hand, the side wall (2B) comprises at least a geometrical irregularity (10, 12) intended to interact with the gasket (4) when the latter is located at the predetermined safety position thereof so as to interrupt, near the irregularity (10, 12), the contact between the gasket (4) and the side wall (2B) and thus to authorize a steam leakage from the inside to the outside of the chamber.

2. The appliance (1) according to claim 1, **characterized in that** the side wall (2B) have an inner face (20B) running opposite to the inside of the bowl (2), said sealing gasket (4) being designed to be in contact with said inner face (20B).

3. The appliance (1) according to claim 2, **characterized in that** the sealing gasket (4) is attached to the lid (3).

4. The appliance (1) according to claim 3, **characterized in that** the lid (3) is designed to move, at least locally, under the effect of pressure increasing inside the chamber, and to drag with it the gasket (4) so as to bring the latter at the predetermined safety position thereof when said pressure reaches the predetermined safety value.

5. The appliance (1) according to any one of preceding claims, **characterized in that** the gasket (4) hugs said falling edge (3B).

6. The appliance (1) according to one of claims 1 to 5, **characterized in that** the sealing gasket (4) has a U-shaped cross-section, the U-legs each forming a first and a second lips (4A, 4B), while the U-web forms the heel (4C) of the gasket (4), the first lip (4A) being intended to come in contact with the side wall (2B) while the second lip (4B) is intended to come in contact with the lid (3).

7. The appliance (1) according to claim 6, **characterized in that** the second lip (4B) hugs the falling edge (3B).

8. The appliance (1) according to one of claims 1 to 7, **characterized in that**, when the pressure inside the chamber reaches the predetermined safety value, the gasket (4) at least locally moves away from the bottom (2A) of the bowl (2) so that at least a portion of said gasket (4) is located at a predetermined distance from said bottom (2A), the geometrical irregularity (10, 12) being positioned on the side wall (2B) at a distance corresponding to said predetermined distance.

9. The appliance (1) according to one of claims 1 to 8, **characterized in that** each geometrical irregularity (10, 12) comprises at least a recess (10A) provided into the side wall (2B).

10. The appliance (1) according to claims 2 and 9, **characterized in that** said recess (10A) is formed through a localized deformation of the side wall (2B), from the inside of the bowl (2) to the outside.

11. The appliance (1) according to one of claims 1 to 10, **characterized in that** it comprises a means (5) for locking the lid (3) onto the bowl (2), designed to locally fasten the lid (3) to the bowl (2) in a plurality of fastening areas (6), each geometrical irregularity (10, 12) being positioned the furthest possible from the fastening areas (6).

12. The appliance (1) according to one of claims 1 to 11, **characterized in that** the geometrical irregularity (10, 12) is arranged on the side wall (2B) at distance from the opening (2C) of the bowl (2).

13. The appliance (1) according to one of claims 1 to 12, **characterized in that** it consists of a pressure cooker.

## Patentansprüche

1. Haushaltsgerät (1) zum Garen von Lebensmitteln unter Druck, aufweisend:
- einen Behälter (2), der mit einem Boden (2A) und einer Seitenwand (2B), die sich von dem Boden (2A) erhebt und eine Öffnung (2C) abgrenzt, versehen ist,
- einen Deckel (3), der dazu bestimmt ist, mit dem Behälter (2) verbunden zu werden, um mit diesem Letzteren einen Gareinschluss zu bilden,
- eine Dichtung (4), die zwischen der Seitenwand (2B) und dem Deckel (3) eingefügt ist, wobei die Dichtung (4) konzipiert ist, um mit der Seitenwand (2B) in Berührung zu sein, solange der Druck, der innerhalb des Einschlusses herrscht, einen vorbestimmten Sicherheitswert nicht überschreitet, um dem Gareinschluss einen im Wesentlichen dichten Charakter zu verleihen,
wobei das Gerät (1) dazu konzipiert ist, dass sich die Dichtung (4), wenn der Druck, der in dem Einschluss herrscht, den vorbestimmten Sicherheitswert erreicht, mindestens lokal in Bezug zu der Seitenwand (2B) verlagert, bis sie eine vorbestimmte Sicherheitsposition erreicht, wobei das Gerät (1) **dadurch gekennzeichnet ist, dass** der Deckel (3) einerseits einen Hauptkörper (3A) aufweist, von dem ausgehend und an dessen Umfang sich ein absteigender Rand (3B) erstreckt, wobei der absteigende Rand (3B) konzipiert ist, um in dem Inneren des Behälters (2) angeordnet und von der Seitenwand (2B) umgeben zu sein, wenn der Deckel (3) auf den Behälter (2) aufgesetzt wird, und andererseits die Seitenwand (2B) mindestens eine geometrische Unregelmäßigkeit (10, 12) aufweist, die konzipiert ist, um mit der Dichtung (4) in Wechselwirkung zu treten, wenn sich diese Letztere in ihrer vorbestimmten Sicherheitsposition befindet, um in der Nähe der Unregelmäßigkeit (10, 12) die Berührung zwischen der Dichtung (4) und der Seitenwand (2B) zu unterbrechen und **dadurch** ein Dampfleck von dem Inneren des Einschlusses zur Außenseite zu erlauben.

2. Gerät (1) nach Anspruch 1, **dadurch gekennzeichnet, dass** die Seitenwand (2B) eine Innenseite (20B) aufweist, die sich gegenüber dem Inneren des Behälters (2) erstreckt, wobei die Dichtung (4) konzipiert ist, um mit der Innenseite (20B) in Berührung zu sein.

3. Gerät (1) nach Anspruch 2, **dadurch gekennzeichnet, dass** die Dichtung (4) an dem Deckel (3) befestigt ist.

4. Gerät (1) nach Anspruch 3, **dadurch gekennzeichnet, dass** der Deckel (3) konzipiert ist, um sich mindestens lokal unter der Einwirkung der Steigerung des Drucks, der in dem Einschluss herrscht, zu verlagern und bei seiner Verlagerung die Dichtung (4) derart mitzunehmen, dass diese Letztere in ihre vorbestimmte Sicherheitsposition gebracht wird, wenn der Druck den vorbestimmten Sicherheitswert erreicht.

5. Gerät (1) nach einem der vorhergehenden Ansprüche, **dadurch gekennzeichnet, dass** die Dichtung (4) den absteigenden Rand (3B) fest umschließt.

6. Gerät (1) nach einem der Ansprüche 1 bis 5, **dadurch gekennzeichnet, dass** die Dichtung (4) einen Querschnitt in U-Form aufweist, wobei die Schenkel des U jeweils eine erste und eine zweite Lippe (4A, 4B) bilden, während die Seele des U den Absatz (4C) der Dichtung (4) bildet, wobei die erste Lippe (4A) dazu bestimmt ist, mit der Seitenwand (2B) in Berührung zu kommen, während die zweite Lippe (4B) dazu bestimmt ist, mit dem Deckel (3) in Berührung zu kommen.

7. Gerät (1) nach Anspruch 6, **dadurch gekennzeichnet, dass** die zweite Lippe (4B) den absteigenden Rand (3B) fest umschließt.

8. Gerät (1) nach einem der Ansprüche 1 bis 7, **dadurch gekennzeichnet, dass** sich die Dichtung (4), wenn der Druck, der in dem Einschluss herrscht, den vorbestimmten Sicherheitswert erreicht, wenigstens lokal von dem Boden (2A) des Behälters (2) entfernt, so dass mindestens ein Abschnitt der Dichtung (4) in eine vorbestimmte Entfernung von dem Boden (2A) gelangt, wobei die geometrische Unregelmäßigkeit (10, 12) auf der Seitenwand (2B) in einer Entfernung positioniert ist, die der vorbestimmten Entfernung entspricht.

9. Gerät (1) nach einem der Ansprüche 1 bis 8, **dadurch gekennzeichnet, dass** die geometrische Unregelmäßigkeit (10, 12) mindestens eine Vertiefung (10A), die in der Seitenwand (2B) angeordnet ist, aufweist.

10. Gerät (1) nach den Ansprüchen 2 und 9, **dadurch gekennzeichnet, dass** die Vertiefung (10A) durch eine lokale Vertiefung der Seitenwand (2B) von dem Inneren des Behälters (2) nach außen ausgebildet ist.

11. Gerät (1) nach einem der Ansprüche 1 bis 10, **dadurch gekennzeichnet, dass** es ein Mittel (5) zum Verriegeln des Deckels (3) auf dem Behälter (2) aufweist, das konzipiert ist, um den Deckel (3) lokal mit dem Behälter (2) in mehreren Verbindungsbereichen (6) zu verbinden, wobei jede geometrische Unregelmäßigkeit (10, 12) möglichst weit von den Verbindungsbereichen (6) entfernt ist.

12. Gerät (1) nach einem der Ansprüche 1 bis 11, **dadurch gekennzeichnet, dass** die geometrische Unregelmäßigkeit (10, 12) auf der Seitenwand (2B) von der Öffnung (2C) des Behälters (2) beabstandet angeordnet ist.

13. Gerät (1) nach einem der Ansprüche 1 bis 12, **dadurch gekennzeichnet, dass** es aus einem Schnellkochtopf besteht.
